Europäisches Patentamt

(19) European Patent Office

Office européen des brevets

(11) **EP 1 208 359 B1**

(12) **EUROPÄISCHE PATENTSCHRIFT**

(45) Veröffentlichungstag und Bekanntmachung des Hinweises auf die Patenterteilung:
**15.12.2004   Patentblatt 2004/51**

(21) Anmeldenummer: **01953935.2**

(22) Anmeldetag: **22.01.2001**

(51) Int Cl.⁷: $G01F\ 1/84$

(86) Internationale Anmeldenummer:
**PCT/EP2001/000674**

(87) Internationale Veröffentlichungsnummer:
**WO 2001/075399 (11.10.2001 Gazette 2001/41)**

(54) **VERFAHREN ZUR BESTIMMUNG CHARAKTERISTISCHER GRÖSSEN EINES MASSENDURCHFLUSSMESSGERÄTES WÄHREND SEINES BETRIEBS**

METHOF OF DETERMINING CHARACTERISTIC PARAMETERS OF A MASS FLOW RATE MEASURING DEVICE DURING OPERATION

PROCEDE POUR DETERMINER DES PARAMETRES CARACTERISTIQUES D'UN DISPOSITIF DE MESURE DE DEBIT MASSIQUE LORS DE SON FONCTIONNEMENT

(84) Benannte Vertragsstaaten:
**AT BE CH CY DE DK ES FI FR GB GR IE IT LI LU MC NL PT SE TR**

(30) Priorität: **21.01.2000   DE 10002635**

(43) Veröffentlichungstag der Anmeldung:
**29.05.2002   Patentblatt 2002/22**

(73) Patentinhaber: **Krohne AG**
**4019 Basel (CH)**

(72) Erfinder: **KOLAHI, Kourush**
**24143 Kiel (DE)**

(74) Vertreter: **Gesthuysen, von Rohr & Eggert**
**Patentanwälte**
**Postfach 10 13 54**
**45013 Essen (DE)**

(56) Entgegenhaltungen:
**EP-A- 0 905 488          EP-A- 0 926 473**
**US-A- 4 781 069          US-A- 5 969 264**

**Beschreibung**

Die Erfindung betrifft ein Verfahren zur Bestimmung des Massendurchflusses mit einem Massendurchflußmeßgerät, das nach dem Coriolis-Prinzip arbeitet, nach dem Oberbegriff des Anspruchs 1.

Zuvor ist gesagt worden, daß zu dem in Rede stehenden Massendurchflußmeßgerät u. a. mindestens zwei der Coriolis-Leitung "zugeordnete" Schwingungserzeuger und mindestens zwei der Coriolis-Leitung "zugeordnete" Meßwertaufnehmer gehören. In der Regel sind die Schwingungserzeuger, jedenfalls ein Teil der Schwingungserzeuger, und die Meßwertaufnehmer, jedenfalls ein Teil der Meßwertaufnehmer, mit der Coriolis-Leitung verbunden. Da dies jedoch nicht zwingend erforderlich ist, ist der Ausdruck "zugeordnet" anstatt des Ausdrucks "verbunden" verwendet worden.

Bei Massendurchflußmeßgeräten, die nach dem Coriolis-Prinzip arbeiten, unterscheidet man grundsätzlich zwischen einerseits solchen, deren Coriolis-Leitung zumindest im wesentlichen gerade ausgeführt ist, und andererseits solchen, deren Coriolis-Leitung schleifenförmig ausgeführt ist. Außerdem unterscheidet man bei den in Rede stehenden Massendurchflußmeßgeräten zwischen einerseits solchen, die nur eine Coriolis-Leitung aufweisen, und andererseits solchen, die zwei Coriolis-Leitungen aufweisen; bei den Ausführungsformen mit zwei Coriolis-Leitungen können diese strömungstechnisch in Reihe oder parallel zueinander liegen.

In jüngerer Zeit setzen sich zunehmend die Massendurchflußmeßgeräte mit nur einer im wesentlichen geraden Coriolis-Leitung durch. Massendurchflußmeßgeräte mit einer geraden Coriolis-Leitung sind in bezug auf den mechanischen Aufbau einfach, d. h. mit vergleichsweise geringen Kosten herstellbar, auf den Innenflächen der Coriolis-Leitung gut bearbeitbar, z. B. polierbar, weisen einen geringen Druckverlust auf und sind selbstentleerend.

Massendurchflußmeßgeräte mit nur einer geraden Coriolis-Leitung sind trotz aller Vorteile unter gewissen Gesichtspunkten auch problematisch.

Massendurchflußmeßgeräte, die nach dem Coriolis-Prinzip arbeiten, bestimmen den Massendurchfluß direkt und bilden einen echten Mittelwert über das Strömungsprofil des durch die Coriolis-Leitung hindurchströmenden Mediums. Unter idealen Bedingungen liefern Massendurchflußmeßgeräte, die nach dem Coriolis-Prinzip arbeiten, prinzipbedingt einen Meßwert, der von den Stoffeigenschaften des durch die Coriolis-Leitung hindurchströmenden Mediums, wie deren Wärmeleitfähigkeit und deren Wärmekapazität, sowie von Prozeßgrößen, wie Druck und Temperatur, nicht beeinflußt wird. Dennoch führen Asymmetrien im Massendurchflußmeßgerät, die z. b. von unvermeidlichen Fertigungstoleranzen und zeitliche Änderungen der Einsatzbedingungen, wie z. B. Temperaturänderungen oder Änderungen der Einspannbedingungen, herrühren, zu einer Verringerung der prinzipbedingt sehr hohen Meßgenauigkeit des Massendurchflußmeßgeräts. Besonders ausgeprägt sind diese Probleme vor allem bei Massendurchflußmeßgeräten mit nur einer geraden Coriolis-Leitung.

Bisher sind verschiedene Versuche unternommen worden, die Einflüsse sich verändernder Umgebungsbedingungen, wie Änderungen der Temperatur bzw. der Einspannbedingungen der Coriolis-Leitung, bei der Messung des Massendurchflusses zu berücksichtigen. So ist z. B. bei dem eingangs genannten, gattungsgemäßen Verfahren (siehe DE 44 13 239 A1) vorgesehen, während dessen Betriebs die Eigenfrequenz der Coriolis-Leitung im Coriolis-Mode zu messen, indem die Coriolis-Leitung zusätzlich zur Anregung in ihrem Arbeits-Mode auch im Coriolis-Mode angeregt wird. Auf diese Weise ist jedoch keine vollständige Berücksichtigung der oben angesprochenen, sich verändernden Umgebungsparameter möglich. Insbesondere wird bei dem gattungsgemäßen Massendurchflußmeßgerät lediglich die Auswirkung einer Temperaturveränderung auf die Dichte des durch die Coriolis-Leitung hindurchströmenden Mediums und die damit verbundene Änderung der Resonanzfrequenz der von dem Medium durchströmten Coriolis-Leitung im Coriolis-Mode berücksichtigt. Die Bestimmung von charakteristischen Größen des Massendurchflußmeßgeräts, wie dessen Nullpunkt und dessen Empfindlichkeit, sind damit jedoch nicht bestimmbar.

Ferner liegen Probleme von Massendurchflußmeßgeräten mit nur einer geraden Coriolis-Leitung darin, daß die schwingenden Komponenten, also im wesentlichen die Coriolis-Leitung, auf die Stellen, an denen die Coriolis-Leitung eingespannt ist, oszillierende Kräfte bzw. Drehmomente ausüben, die insbesondere bei Massendurchflußmeßgeräten, mit nur einer geraden Coriolis-Leitung nicht rückwirkungsfrei aufgenommen werden können. Dadurch kann einerseits Schwingungsenergie asymmetrisch aus der Coriolis-Leitung an die Umgebung abfließen und reflektiert wieder ungleichmäßig in die Coriolis-Leitung einkoppeln und andererseits können Vibrationen aus dem Umfeld ungleichmäßig auf die ein- bzw. auslaufseite Hälfte der Coriolis-Leitung einkoppeln. Dies führt zu einer Verfälschung der Meßergebnisse.

Im Stand der Technik ist bisher versucht worden, dieses Problem mit Hilfe von Gegenschwingern zu lösen. Diese dienen im allgemeinen zur Kompensation der Gehäusevibrationen. Dazu wird exemplarisch auf folgende Patent-bzw. Offenlegungsschriften verwiesen: DE 198 40 782 A1, EP 0 598 287 A1, EP 0 759 542 A1, EP 0 831 306 und EP 0 849 568 A1. Trotz dieser mechanisch aufwendigen Gegenschwinger ist die schwingungstechnische Entkopplung von Coriolis-Massendurchflußmeßgeräten von der Umgebung bisher unvollkommen. Dazu kommen weitere Probleme, wie Auswirkungen von Pulsationen, also Kontinuumsschwankungen des Mediums in der Coriolis-Leitung auf das Meßergebnis oder unregelmäßige Schwingungen der Coriolis-Leitung bei starken Inhomogenitäten im strömenden Medium. Aus diesen Gründen ändern sich die charakteristischen Größen Nullpunkt und Empfindlichkeit im Betrieb.

Demgemäß ist es die Aufgabe der Erfindung, ein Verfahren zur Bestimmung des Massendurchflusses bereitzustellen, mit dem eine Erhöhung der Genauigkeit und der Nullpunktstabilität des Massendurchflußmeßgeräts erzielbar ist. Dies wird durch die Merkmale des kennzeichnenden Teils des Anspruchs 1 erreicht.

Weiter oben ist gesagt worden, daß die Coriolis-Leitung in voneinander unabhängigen Schwingungsformen anregbar ist. Selbstverständlich betrifft diese Anregung in voneinander unabhängigen Schwingungsformen nicht nur die Anregung der Coriolis-Leitung alleine sondern auch die Anregung der Coriolis-Leitung, die von dem Medium durchströmt wird, dessen Massendurchfluß gemessen werden soll.

Grundsätzlich ist die modellgestützte Bestimmung der charakteristischen Größen des Massendurchflußmeßgeräts vor Inbetriebnahme des Geräts oder in Betriebspausen durchführbar. Gemäß der Erfindung jedoch, werden die charakteristischen Größen des Massendurchflußmeßgeräts während dessen Betriebs bestimmt. Auf diese Weise ist es einerseits nicht erforderlich, den Meßbetrieb zur Bestimmung der charakteristischen Größen zu unterbrechen, und andererseits stehen auf diese Weise die charakteristischen Größen "online", also in Echtzeit, zur Verfügung, so daß sie fortlaufend bei der Bestimmung des Massendurchflusses berücksichtigt werden können.

Gemäß einer bevorzugten Weiterbildung der Erfindung ist vorgesehen, daß die Coriolis-Leitung in einer dritten, jeweils von der ersten Schwingungsform und der zweiten Schwingungsform unabhängigen Schwingungsform angeregt wird und durch das von den Meßwertaufnehmern erfaßte Antwortverhalten der Coriolis-Leitung auf die Anregung in der ersten Schwingungsform, die Anregung in der zweiten Schwingungsform und die Anregung in der dritten Schwingungsform charakteristische Größen des Massendurchflußmeßgeräts modellgestützt bestimmt werden. Eine weitere Verbesserung der Bestimmung der charakteristischen Größen wird erreicht, indem die Coriolis-Leitung zusätzlich in einer vierten, jeweils von der ersten Schwingungsform, von der zweiten Schwingungsform und von der dritten Schwingungsform unabhängigen Schwingungsform angeregt wird und durch das von den Meßwertaufnehmern erfaßte Antwortverhalten der Coriolis-Leitung auf die Anregung in der ersten Schwingungsform, die Anregung in der zweiten Schwingungsform, die Anregung in der dritten Schwingungsform und die Anregung in der vierten Schwingungsform charakteristische Größen des Massendurchflußmeßgeräts bestimmt werden.

Um voneinander unabhängige Schwingungsformen zu erzielen, ist es erfindungsgemäß besonders bevorzugt, daß die erste Schwingungsform und die dritte Schwingungsform von zueinander phasenverschobenen Schwingungen im gleichen Mode gebildet werden. Besonders bevorzugt ist dabei eine Phasenverschiebung der ersten Schwingungsform zur dritten Schwingungsform um 90°. Dementsprechend ist es erfindungsgemäß ebenfalls besonders bevorzugt, daß die zweite Schwingungsform und die vierte Schwingungsform von zueinander phasenverschobenen Schwingungen im gleichen Mode gebildet werden, wobei dieser Mode von dem der ersten Schwingungsform und der dritten Schwingungsform entsprechenden Mode verschieden ist. Ebenfalls ist es erfindungsgemäß besonders bevorzugt, daß die zweite Schwingungsform zur vierten Schwingungsform eine Phasenverschiebung von 90° aufweist.

Besonders bevorzugt ist es dabei ferner, wenn die erste Schwingungsform von einer Schwingung im Arbeits-Mode der Coriolis-Leitung gebildet wird. Dementsprechend wird auch die dritte Schwingungsform von einer Schwingung im Arbeits-Mode der Coriolis-Leitung gebildet, ist jedoch zu dieser vorzugsweise um 90° phasenverschoben. Außerdem ist es besonders bevorzugt, daß die zweite Schwingungsform von einer Schwingung im Coriolis-Mode der Coriolis-Leitung gebildet wird und somit also auch die vierte Schwingungsform von einer Schwingung im Coriolis-Mode der Coriolis-Leitung gebildet wird, allerdings vorzugsweise um 90° phasenverschoben zu dieser.

Eine besonders einfache und elegante Lösung wird somit mit Hilfe eines Massendurchflußmeßgerätes erzielt, das in vier unabhängigen, zueinander jeweils orthogonalen Schwingungsformen anregbar ist, wobei zwei der Schwingungsformen von zwei zueinander um 90° phasenverschobenen Schwingungen im Arbeits-Mode der Coriolis-Leitung gebildet werden und zwei der Schwingungsformen von zwei zueinander um 90° phasenverschobenen Schwingungen im Coriolis-Mode der Coriolis-Leitung gebildet werden.

Grundsätzlich sind eine Vielzahl von charakteristischen Größen eines Massendurchflußmeßgeräts bestimmbar. Im vorliegenden Fall werden jedoch als charakteristische Größen der Nullpunkt und die Empfindlichkeit des Massendurchflußmeßgeräts bestimmt . Diese charakteristischen Größen haben im Ergebnis wesentlichen und maßgeblichen Einfluß auf die Genauigkeit der Bestimmung des Massendurchflusses.

Die Anordnung der beiden Schwingungserzeuger sowie die Anordnung der beiden Meßwertaufnehmer ist grundsätzlich im Rahmen praktischer konstruktionstechnischer Gesichtspunkte beliebig. Besonders bevorzugt ist jedoch, daß die beiden Schwingungserzeuger jeweils in einem gleichen axialen Bereich wie ein jeweiliger Meßwertaufnehmer vorgesehen sind. Besonders bevorzugt ist dabei, daß die Paare von jeweils einem Schwingungserzeuger und jeweils einem Meßwertaufnehmer axial im gleichen Abstand von der Mitte der Coriolis-Leitung und insbesondere besonders bevorzugt einander gegenüberliegend angeordnet sind.

Bei dem erfindungsgemäßen Verfahren werden somit charakteristische Größen, die als Zusatzinformationen zur Verfügung gestellt werden müssen, um eine Verbesserung der Meßgenauigkeit zu erreichen, "online" bestimmt. Zu diesen "online" bestimmten charakteristischen Größen zählen die Strukturinformationen über die interne Repräsentation der charakteristischen Größen Nullpunkt und Empfindlichkeit sowie Informationen über die bekannten Randbedingungen, also externe Parameter, unter denen der Meßvorgang abläuft.

Grundlage für das erfindungsgemäße Verfahren ist ein Modell für die schwingende, von dem Medium durchströmte Coriolis-Leitung, das vollständig durch solche Parameter beschrieben wird, die sich aufgrund der Antwort der durchströmten Coriolis-Leitung auf die Anregung in den voneinander unabhängigen Schwingungsformen bestimmen lassen.

Das erfindungsgemäße Verfahren eignet sich insbesondere für ein Massendurchflußmeßgerät, das genau eine im wesentlichen gerade Coriolis-Leitung aufweist, ist jedoch nicht darauf beschränkt.

Im einzelnen gibt es nun eine Vielzahl von Möglichkeiten, das erfindungsgemäße Verfahren zur Bestimmung des Massendurchflusses auszugestalten und weiterzubilden. Dazu wird einerseits auf die dem unabhängigen Patentanspruch nachgeordneten Patentansprüche und andererseits auf die nachfolgende Beschreibung eines bevorzugten Ausführungsbeispiels unter Bezugnahme auf die Zeichnung verwiesen. In der Zeichnung zeigt:

Fig. 1 das Schema eines Massendurchflußmeßgeräts,

Fig. 2 das für das Verfahren gemäß dem bevorzugten Ausführungsbeispiel der Erfindung verwendete mechanische Modell eines Massendurchflußmeßgeräts und

Fig. 3 ein Wirkungsdiagramm, aus dem schematisch die wesentliche Wirkungsstruktur eines Massendurchflußmeßgeräts bei Anwendung des erfindungsgemäßen Verfahrens ersichtlich ist.

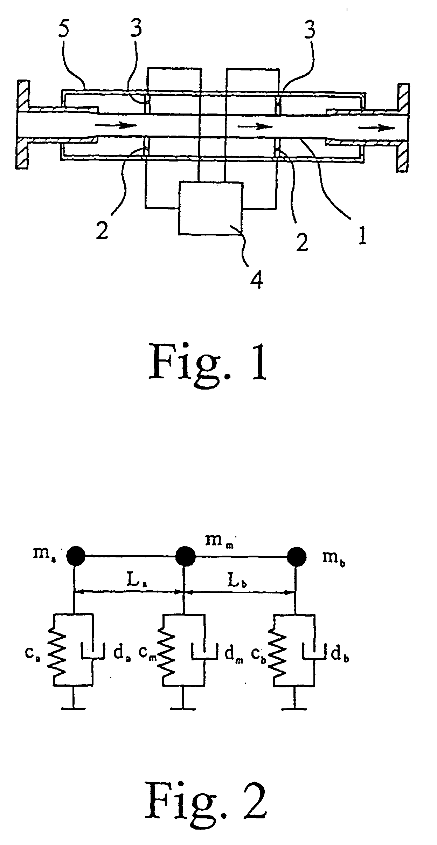

Aus Fig. 1 ist ein vereinfachtes Blockschaltbild eines Massendurchflußmeßgeräts ersichtlich. Das Massendurchflußmeßgerät wird im wesentlichen von einer Coriolis-Leitung 1, zwei die Coriolis-Leitung 1 anregenden Schwingungserzeugern 2, zwei Meßwertaufnehmern 3, einem digitalen Signalprozessor 4 und einem Trägerrohr 5 gebildet. Die beiden Schwingungserzeuger 2 sind jeweils in einem gleichen axialen Bereich wie ein jeweiliger Meßwertaufnehmer 3 vorgesehen und jeweils im gleichen Abstand von der Mitte der Coriolis-Leitung 1 angeordnet. Die Coriolis-Leitung 1 wird in Pfeilrichtung von einem Medium, dessen Massendurchfluß gemessen werden soll, durchströmt, und, wie bei vielen herkömmlichen Coriolis-Massendurchflußmeßgeräten ist die Coriolis-Leitung 1 von einem Trägerrohr 5 umgeben, das an dem einlaufseitigen bzw. dem auslaufseitigen Ende der Coriolis-Leitung 1 befestigt ist. Die gesamte Signalverarbeitung, Regelung und Steuerung erfolgt bei dem Massendurchflußmeßgerät völlig digital und ist auf dem digitalen Signalprozessor 4 realisiert. Die von den Meßwertaufnehmern 3 herkommenden Signale werden dabei einstufig breitbandig verstärkt und direkt anschließend digitalisiert. Die von dem digitalen Signalprozessor 4 erzeugten Ansteuersignale für die Schwingungserzeuger 2 durchlaufen lediglich nicht weiter dargestellte Spannungs-Strom-Wandler.

Das dem Verfahren gemäß dem bevorzugten Ausführungsbeispiel der Erfindung zugrundeliegende Modell des Massendurchflußmeßgeräts geht davon aus, daß die Coriolis-Leitung 1 nicht starr eingespannt und ideal symmetrisch bezüglich ihrer Abmessungen und Materialeigenschaften ist. Auf diese Weise ist es möglich, die in der Realität vorhandenen Änderungen der charakteristischen Größen, wie Nullpunkt und Empfindlichkeit, mathematisch abzubilden, denn die Ursachen für diese Änderungen sind in unvermeidlichen Asymmetrien in dem Massendurchflußmeßgerät zu suchen. Die Quellen derartiger Asymmetrien sind z. B. Fertigungs- bzw. Montageungenauigkeiten im Aufbau, insbesondere betreffend die Coriolis-Leitung 1, die Schwingungserzeuger 2, die Meßwertaufnehmer 3, das Trägerrohr 5 und die Aufhängung der Coriolis-Leitung, sowie Dichte- bzw. Viskositätsschwankungen in dem die Coriolis-Leitung 1 durchströmenden Medium, Temperaturgradienten bzw. Druckgradienten längs der Coriolis-Leitung 1 und Ablagerungen in der Coriolis-Leitung 1.

Eine besonders praktische und elegante Form eines Modells, das sich besonders gut zur "online"-Bestimmung der charakteristischen Größen eines Massendurchflußmeßgeräts eignet, beschreibt das Massendurchflußmeßgerät mit diskreten konzentrierten Elementen. Das entsprechende mechanische Modell ist schematisch aus Fig. 2 ersichtlich. Die effektiv schwingende Masse der linken Hälfte der Coriolis-Leitung 1 wird als ideale Ersatzmasse $m_a$ an der Position des linken Meßwertaufnehmers 3 bei $L_a$ angenommen. Dementsprechend wird die Masse $m_b$ der rechten Hälfte der Coriolis-Leitung 1 an der Position des rechten Meßwertaufnehmers 3 bei $L_b$ angenommen. Eine mittlere Ersatzmasse berücksichtigt die Massen, die nur bei der Translation beteiligt sind, jedoch nicht bei der Rotation, und ist mit $m_m$ bezeichnet. Die Massen $m_a$, $m_m$ und $m_b$ sind über einen masselosen, radial starren und axial flexiblen Balken miteinander verbunden. An diesen Massen greifen interne und externe Kräfte an. Entsprechendes gilt für die Ersatzfedem $c_a$, $c_m$ und $c_b$ sowie für die Dämpfungen $d_a$, $d_m$ und $d_b$.

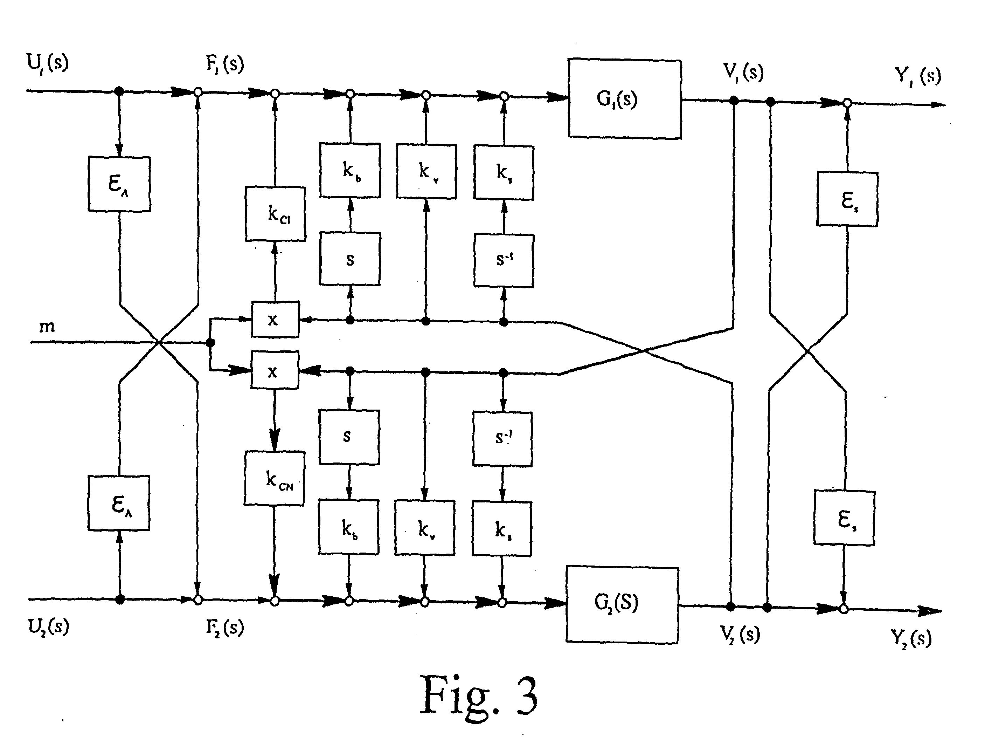

Die wesentliche Wirkungsstruktur des durch das Modell beschriebenen Massendurchflußmeßgerät ist mit allen seinen möglichen Kopplungen aus Fig. 3 ersichtlich. Dabei ist der Normalbetrieb mit den dick eingezeichneten Wirkungslinien besonders hervorgehoben. Wesentlich sind dabei die beiden Schwinger $G_1(s)$ und $G_2(s)$,

$$G_1(s) = \frac{V_1(s)}{F_1(s)} = \frac{k_1 s}{s^2 + 2d_1\omega_{01}s + \omega_{01}^2} \qquad (1)$$

$$G_2(s) = \frac{V_2(s)}{F_2(s)} = \frac{k_2 s}{s^2 + 2d_2\omega_{02}s + \omega_{02}^2}. \qquad (2)$$

die auf 6 verschiedene Arten miteinander gekoppelt sind. Diese Kopplungen beschreiben die Asymmetrien im Massendurchflußmeßgerät:

1. Die Beschleunigungskopplung $k_b$ kommt durch Unterschiede der schwingenden Massen ($m_a \neq m_b$) in den beiden Hälften der Coriolis-Leitung 1 zustande.

2. Die Wegkopplung $k_s$ wird durch ungleiche potentielle Energiespeicher in den beiden Hälften der Coriolis-Leitung 1 hervorgerufen ($c_a \neq c_b$).

3. Eine Geschwindigkeitskopplung $k_v$ liegt vor, wenn die dissipierten Energien in den beiden Hälften der Coriolis-Leitung 1 bei gleicher Schnelle unterschiedlich sind ($d_a \neq d_b$).

4. Die Antriebskopplung $\varepsilon_A$ bringt den Unterschied in den statischen Eigenschaften der Schwingungserzeuger 2 zum Ausdruck.

5. Die Sensorkopplung $\varepsilon_S$ beschreibt die unterschiedlichen statischen Eigenschaften der Meßwertaufnehmer 3.

6. Die massenstrombedingten Kopplungen $k_{CN}$ und $k_{CI}$ sind die einzigen erwünschten Kopplungen der beiden Schwingungssysteme. Sie erlauben die Massenstrommessung.

Die Identifikation der Modellparameters ist im Zeitbereich aufgrund der extrem schwachen Dämpfung der beiden Moden mit vertretbarem Aufwand nicht möglich, da bei Anregung mit PRBS die Antwortsignale nur in einem sehr schmalbandigen Bereich um die Eigenfrequenzen meßbare spektrale Anteile aufweisen. Eine Identifikation im Frequenzbereich ist daher bevorzugt.
Die Übertragungsfunktionen zwischen Antrieb im Mode $i = \{1, 2\}$ und Messung von Mode $j = \{1, 2\}$ lauten:

$$G_{ij}(s) = \frac{Z_{ij}(s)}{N_{ij}(s)} = \frac{\displaystyle\sum_{\ell=0}^{m} b_{ij\ell}s^\ell}{\displaystyle\sum_{\nu=0}^{n} a_{ij\nu}s^\nu} \quad . \qquad (3)$$

Die Nennerpolynome $N_{ij}(s)$ sind für alle vier Übertragungsfunktionen $G_{ij}(s)$ identisch. Die Koeffizienten der vier Übertragungsfunktionen $\underline{\theta} = \{a_{ijv}, b_{ijl}\}$ sind mit den physikalischen Systemparametern $\underline{p} = \{\omega_{01k}, \omega_{02k}, d_{01k}, ...\}$ über nichtlineare Beziehungen verknüpft:

$$\underline{\theta} = \underline{f}(\underline{p}) \qquad (4)$$

Diese Funktion ist sehr kompliziert und ihre Umkehrfunktion läßt sich allgemein nicht bestimmen. Hinzu kommt, daß im vorliegenden Fall die Anzahl der unbekannten Parameter größer als die Anzahl der Bestimmungsgleichungen ist. Dies ist ersichtlich durch mehrere identisch wirkende Pfade in der Wirkungsstruktur nach Fig. 3. Aus diesen Gründen ist hier ein spezieller Lösungsweg beschritten worden.
Die Ein- und Ausgangskopplungen, d. h. die Unterschiede in den Schwingungserzeugern $\varepsilon_A$ und in den Meßwertaufnehmern $\varepsilon_S$, wurden zunächst experimentell bestimmt und behoben. Dann wurden die Beschleunigungs- und Geschwindigkeitskopplung ($k_b$ und $k_s$) bei der Frequenz $\omega_{01}$ und $k_{sb}$ zusammengefaßt. Dies ist im vorliegenden Fall, d. h. im quasistationären Betrieb, möglich und sinnvoll, da nur die Differenz der beiden Kopplungen wirksam wird. Anschließend wurden die übrigen Modellkoeffizienten mittels eines Maximum-Likelihood-Verfahrens im Frequenzbereich geschätzt und daraus die unbekannten physikalischen Parameter berechnet.

Zur Bestimmung der charakteristischen Größen sind neben den in den vorangegangenen Abschnitten bereitgestellten a-priori-Informationen zusätzliche "online"-Informationen erforderlich. Diese können durch weitere Sensoren oder durch eine geeignete zusätzliche Anregung des Systems und eine modellgestützte Auswertung der Systemantworten gewonnen werden. Gemäß dem hier beschriebenen bevorzugten Ausführungsbeispiel der Erfindung wird eine zusätzliche Anregung vorgeschlagen.

Die Grundidee besteht dabei darin, die Coriolis-Leitung 1 in ihrer ersten Eigenform und in ihrer zweiten Eigenform definiert zu stimulieren, um daraus Informationen über das Verhalten des Massendurchflußmeßgeräts zu erhalten.

Aus Fig. 3 lassen sich die Geschwindigkeitsantworten der Eigenformen direkt ablesen:

$$V_1(s) = G_1(s)\left[F_1(s) + V_2(s)\left(s\,k_b + k_{CI}\,\dot{m} + k_v + \frac{k_s}{s}\right)\right] \quad . \tag{5}$$

$$V_2(s) = G_2(s)\left[F_2(s) + V_1(s)\left(s\,k_b + k_{CN}\,\dot{m} + k_v + \frac{k_s}{s}\right)\right] \quad . \tag{6}$$

Diese Gleichungen dienen im folgenden zur Beschreibung relevanter Betriebsarten des Massendurchflußmeßgeräts und stellen die Basis für die Bestimmung der charakteristischen Größen Nullpunkt und Empfindlichkeit dar.

Im Normalbetrieb des Massendurchflußmeßgerät es wird nur die erste Eigenform extern angeregt. Diese Betriebsart ist gekennzeichnet durch:

$$F_{2N}(s) = 0;\ \omega = \omega_{01}\ ;\ F_{1N} = konst.\ ;\ \angle(F_{1N}V_{1N}) = 0\ ;\ \omega_{02} > \omega_{01}$$

Unter diesen Spezifikationen ergeben sich für $V_{1N}$ und $V_{2N}$ die folgenden Beziehungen:

$$Re\{V_{1N}\} = Re\{G_1\}\left[Re\{F_{1N}\} + Re\{V_{2N}\}\,(k_{CI}\,\dot{m} + k_v)\right.$$
$$\left. + Im\{V_{2N}\}\left(\frac{k_s}{\omega_{01}} - \omega_{01}\,k_b\right)\right] \tag{7}$$

$$Re\{V_{2N}\} = Im\{G_2\}Re\{V_{1N}\}\left(\frac{k_s}{\omega_{01}} - \omega_{01}\,k_b\right) \tag{8}$$

$$Im\{V_{2N}\} = Im\{G_2\}Re\{V_{1N}\}\,(k_{CN}\,\dot{m} + k_v) \tag{9}$$

Für den Zeitversatz $\Delta t$ zwischen den ein- und auslaufseitigen Signalen $V_a$ und $V_b$ von den Meßwertaufnehmern 3 gilt:

$$y_{MN} := \Delta t = \frac{1}{\omega_{01}} \cdot \Delta\varphi \approx \frac{1}{\omega_{01}} \cdot \frac{Im\{V_{2N}\}}{Re\{V_{1N}\}} \tag{10}$$

Setzt man Gleichung (9) in Gleichung (10) ein, so ergibt sich die statische Kennlinie des Massendurchflußmeßgerät im Normalbetrieb:

$$y_{MN} = \underbrace{\frac{1}{\omega'_{01}} Im\{G_2\} k_{CN}}_{E_N \,:=\, Empfindlichkeit} \; \dot{m} \div \underbrace{\frac{1}{\omega_{01}} Im\{G_2\} k_v}_{N_N \,:=\, Nullpunkt} \qquad (11)$$

Die charakteristischen Kenngrößen Empfindlichkeit und Nullpunkt können durch Kalibrierung des Massendurchflußmeßgerät bestimmt werden. Sie sind jedoch zeitabhängig, da sie den zeitveränderlichen Umgebungsbedingungen entsprechen.

Die Weg- und Beschleunigungskopplung stören in zweierlei Hinsicht. Sie beeinflussen zum einen die Arbeitsfrequenz und beeinträchtigen damit die Dichtemessung. Zum anderen behindern sie die Bestimmung des Massendurchflusses über die Gleichung (7). Ein eleganter Ausweg ist die Entkopplung der beiden Eigenformen bezüglich der Auslenkung und der Beschleunigung. Dazu sind die folgenden kopplungsbedingten Kräfte zu kompensieren:

$$F_{1Kopplung} = Im\{V_{2N}\} \left( \frac{k_s}{\omega'_{01}} - \omega_{01} k_b \right) \qquad (12)$$

$$F_{2Kopplung} = Re\{V_{1N}\} \left( \frac{k_s}{\omega_{01}} - \omega_{01} k_b \right) \qquad (13)$$

Setzt man die Gleichung (8) in die Gleichungen (12) und 13) ein, so erhält man die Kopplungskräfte und damit die erforderlichen Kompensationskräfte:

$$F_{1\,Kopplung} = \frac{Im\{V_{2N}\}}{Im\{G_2\}} \cdot \frac{Re\{V_{2N}\}}{Re\{V_{1N}\}} \qquad (14)$$

$$F_{2\,Kopplung} = \frac{Re\{V_{2N}\}}{Im\{G_2\}} \qquad (15)$$

$F_{2Kopplung}$ läßt sich sogar in einem Kompensationsverfahren unabhängig von einem sich eventuell ändernden $Im\{G_2\}$ bestimmen. Dazu wird die gemessene Größe $Re\{V_{2N}\}$ in einem Regelkreis über die Anregung der zweiten Eigenform $F_{2Kompensation}$ auf Null geregelt. Die Regelung erzwingt also:

$$F_{2\,Kopplung} = -F_{2\,Kompensotion} \qquad (16)$$

Aus den Gleichungen (14), (15) und (16) läßt sich $F_{1Kopplung}$ auch unabhängig von $Im\{G_2\}$ bestimmen. Sie wird dann über eine zusätzliche Anregung der ersten Eigenform mit:

$$F_{1\,Kompensation} = -F_{1\,Kopplung} = F_{2\,Kompensation} \cdot \frac{Im\{V_{2N}\}}{Re[V_{1N}\}} \qquad (17)$$

kompensiert. Nach der Entkopplung der beiden Eigenformen bezüglich der Auslenkung und Beschleunigung erhält man für $V_{1NK}$ und $V_{2NK}$ folgende Beziehungen:

$$Re\{V_{1NK}\} = Re\{G_1\}Re\{F_{1N}\} \tag{18}$$

$$Re\{V_{2NK}\} = 0 \tag{19}$$

$$Im\{V_{2NK}\} = Im\{G_2\}Re\{V_{1NK}\}\,(k_{CN}\,\dot{m} + k_v) \tag{20}$$

Die statische Kennlinie des Massendurchflußmeßgerät in dieser Betriebsart, in der die Wegkopplung und die Beschleunigungskopplung kompensiert sind, ergibt sich nach Gleichung (20):

$$y_{MNK} := \frac{1}{\omega_{01}} \cdot \frac{Im\{V_{2NK}\}}{Re\{V_{1NK}\}} = \frac{1}{\omega_{01}}\,Im\{G_2\}\,k_{CN}\,\dot{m} + \frac{1}{\omega_{01}}\,Im\{G_2\}\,k_v\,. \tag{21}$$

Diese Kennlinie ist identisch mit der des Massendurchflußmeßgerät im Normalbetrieb nach Gleichung (11).
Im Inversbetrieb des Massendurchflußmeßgerät wird nur die zweite Eigenform extern angeregt. Diese Betriebsart ist gekennzeichnet durch:

$$F_{1I}(s) = 0\,;\ \omega = \omega_{01}\,;\ F_{2I} = konst.;\ \omega_{02} > \omega_{0I}.$$

Unter diesen Betriebsbedingungen sowie unter Hinzunahme der Kompensation von Weg- und Beschleunigungskopplung ergibt sich für $V_{1I}$ und $V_{2I}$:

$$Re\{V_{1I}\} = Re\{G_1(j\omega_{01})\}Re\{V_{2I}\}(k_{CI}\,\dot{m} + k_v) \tag{22}$$

$$Re\{V_{2I}\} = Im\{G_2\}Im\{F_{2I}\} \tag{23}$$

$$Im\{V_{2I}\} = Im\{G_2\}[Re\{F_{2I}\} + Re\{V_{1I}\}(k_{CN}\,\dot{m} + k_v)] \tag{24}$$

Für die statische Kennlinie des Massendurchflußmeßgerät im Inversbetrieb ergibt sich aus Gleichung (22):

$$y_{MI} := \frac{Re\{V_{1I}\}}{Re\{V_{2I}\}} = \underbrace{Re\{G_1\}k_{CI}}_{E_I}\,\dot{m} + \underbrace{Re\{G_1\}k_v}_{N_I} \tag{25}$$

$E_I$ und $N_I$ bezeichnen die charakteristischen Kenngrößen Empfindlichkeit und Nullpunkt im Inversbetrieb.
Die Gleichung (24) entspricht bis auf den Term $Re\{F_{2I}\}$ der statischen Kennlinie des Massendurchflußmeßgerät im Normalbetrieb (vgl. Gleichung (9)). Wählt man nun $F_{2I}$ orthogonal zu $V_I$, so beeinflussen sich der Normal- und Inversbetrieb kaum. Dies ist entscheidend, da die Beobachtbarkeit der Arbeitsfrequenz $\omega_{01}$ im reinen Inversbetrieb nicht immer gewährleistbar ist und daher beiden Eigenforme gleichzeitig anzuregen sind (Mischbetrieb).
Im Mischbetrieb gilt:

$$\omega = \omega_{01}\,;\ F_{1M} = F_{1N} = konst.;\ \angle\{F_{1M}V_{1M}\} = 0\,;$$

$$F_{2M} = konst.;\ \angle\{F_{1M}F_{2M}\} = 90°\,;\ \omega_{02} > \omega_{01}$$

Hieraus lassen sich $V_{1M}$ und $V_{2M}$ nach den Gleichungen (5) und (6) unter Berücksichtigung der Weg- und Beschleunigungskompensation berechnen:

$$Re\{V_{1M}\} = Re\{G_1\}\, [Re\{F_{1M}\} + Re\{V_{2M}\}(k_{C1}\,\dot{m} + k_v)] \qquad (26)$$

$$Re\{V_{2M}\} = Im\{G_2\}Im\{F_{2M}\} \qquad (27)$$

$$Im\{V_{2M}\} = Im\{G_2\}Re\{V_{1M}\}\,(k_{CN}\,\dot{m} + k_v) \qquad (28)$$

Setzt man Gleichung (18) in Gleichung (26) ein, so erhält man die Kennlinie des Massendurchflußmeßgerät im Inversbetrieb:

$$y_{MMI} := \frac{Re\{V_{1M}\} - Re\{V_{1NK}\}}{Re\{V_{2M}\}} = Re\{G1\}\, k_{CI}\,\dot{m} + Re\{G_1\}k_v \qquad (29)$$

Aus der Gleichung (28) ergibt sich die Kennlinie des Normalbetriebs zu:

$$y_{MMN} := \frac{1}{\omega_{01}} \cdot \frac{Im\{V_{2M}\}}{Re\{V_{1M}\}} = \frac{1}{\omega_{01}}\, Im\{G_2\}\, k_{CN}\,\dot{m} + \frac{1}{\omega_{01}}\, Im\{G_2\}\, k_v \qquad (30)$$

Zur Bestimmung der Empfindlichkeit im laufenden Betrieb sind nach Gleichung (11) drei Parameter erforderlich. Der erste Parameter $k_{CN}$ beschreibt die Umrechnung der verteilten Coriolis-Kräfte entlang der Coriolis-Leitung in lokalisierte Kräfte innerhalb des Modells. Deshalb wird er als unveränderliche Konstante angesehen. Der zweite Parameter $\omega_{01}$ ist die Stellgröße für $\angle\{F_1, V_1\} = 0$ und ist daher bekannt. Der dritte Parameter $Im\{G_1\}$ wird im Betrieb über die Gleichung (27) bestimmt. Damit lautet die Bestimmungsgleichung für die Empfindlichkeit:

$$E_N = k_{CN} \cdot \frac{1}{\omega_{01}} \cdot \frac{Re\{V_{2M}\}}{Im\{F_{2M}\}} \qquad (31)$$

Zur Bestimmung des Nullpunktes ist nach Gleichung (11) neben dem schon bekannten Parameter $Im\{G_2\}$ (Gleichung (27)) nur noch $k_v$ zu bestimmen. Dazu wird $m$ in den beiden Kennlinien für Normal- und Inversbetrieb (Gleichung (29) und (30)) eliminiert und nach $k_v$ aufgelöst. Nach Einsetzen von $k_v$ in gl. (11) sowie Berücksichtigung der Gleichungen (18) und (27) erhält man für den Nullpunkt die Bestimmungsgleichung:

$$N_N = \frac{k_{CN}Re\{F_{1N}\}Re\{V_{1M}\}[Re\{V_{1M}\} - Re\{V_{1NK}\}]}{(k_{CN}-k_{CI})Re\{V_{1M}\}Re\{V_{2M}\}/Re\{V_{INK}\}} -$$

$$\frac{k_{CI}Im\{F_{2M}\}Re\{V_{1NK}\}Im\{V_{2M}\}}{(k_{CN} - k_{CI})Re\{V_{1M}\}Re\{V_{2M}\}Re\{V_{INK}\}} \qquad (32)$$

Aus den Gleichungen (31) und (32) können damit die charakteristischen Größen Nullpunkt und Empfindlichkeit im laufenden Betrieb bestimmt werden.

Gemäß dem hier dargestellten bevorzugten Ausführungsbeispiel der Erfindung werden also die wesentlichen Informationen über das Coriolis-Massendurchflußmeßgerät in einem physikalisch-mathematischen Modell vierter Ordnung abgelegt. Dazu ist ausgehend von einem kontinuierlichen Modellansatz für die Wechselwirkung zwischen dem strömenden Medium und dem schwingenden Coriolis-Meßrohr ein diskretes Modell mit konzentrierten Parametern erstellt worden, das die beiden wichtigsten Schwingungsmoden der Coriolis-Leitung und deren Kopplung miteinander beschreibt. Diese Kopplungen kommen zum einen durch den zu messenden Massestrom durch die Coriolis-Leitung und zum anderen durch Unsymmetrien im Aufbau zustande. Zur Bestimmung der charakteristischen Größen Nullpunkt und Empfindlichkeit werden die beiden Eigenformen der Coriolis-Leitung im Normalbetrieb bezüglich Auslenkung und Beschleunigung entkoppelt, womit eine Symmetrierung der Bewegung der Coriolis-Leitung erzwungen wird. Aus der Auswertung der durch orthogonale Kräfte angeregten Eigenformen mit Hilfe des gemäß dem bevorzugten Ausführungsbeispiel der Erfindung erstellten mathematisch-physikalischen Modells lassen sich die charakteristischen Größen Nullpunkt und Empfindlichkeit des Coriolis-Massendurchflußmeßgeräts beschreiben und bestimmen.

Bei dem erfindungsgemäßen Verfahren kann, wie zuvor schon ausgeführt, eine Korrektur der Dichtemessung durchgeführt werden. Welche Möglichkeiten sich für die Korrektur der Dichtemessung erfindungsgemäß im einzelnen ergeben, sei nachfolgend unter Abgrenzung zum Stand der Technik nochmals detailliert ausgeführt.

Die Dichte des strömenden Mediums kann bei einem Coriolis-Massendurchflußmeßgerät mit einem einzigen geraden Meßrohr über die Resonanzfrequenz des ersten Modes bestimmt werden:

$$\omega_{01} = \sqrt{\frac{c_o + c_m + c_b}{m_o + m_m + m_b}} = \sqrt{\frac{c_1}{m_R + V \rho}} \Rightarrow \rho = \frac{c_1}{V} \cdot \frac{1}{\omega_{01}^2} - \frac{m_R}{V}$$

Dabei gilt

$\omega_{01}$ = Resonanzfrequenz (Arbeitsfrequenz)
$\rho$ = Fluiddichte
$V$ = Messrohrvolumen
$m_R$ = Messrohrmasse
$c_l$ = Federkonstante des Messrohrs (die auf den Mode 1 wirkt).

Die gesamte Federkonstante der Coriolis-Leitung bezüglich des ersten Modes $c_l$ setzt sich aus Federkonstanten des mechanischen Ersatzmodells $c_a$, $c_m$ und $c_b$ zusammen. Diese Federkonstanten sind abhängig vom Elastizitätsmodul der Coriolis-Leitung und damit abhängig von der Temperatur. Außerdem ändern sie sich infolge axialer Spannung. Daher wird die Abhängigkeit der Federkonstante von der Temperatur und von der axialen Spannung durch die Beziehung:

$$c_l = c_a + c_m + c_b = f(T, \sigma_c)$$

zum Ausdruck gebracht, wobei T die Temperatur und $\sigma_c$ die axiale Spannung darstellen.

Zur Bestimmung der Fluiddichte nach obiger Gleichung ist sowohl eine Temperaturkorrektur als auch eine Korrektur des Einflusses axialer Spannungen erforderlich. Zur Ermittlung der entsprechenden Korrekturfaktoren werden im Stand der Technik zusätzliche Messungen vorgenommen, beispielsweise eine Temperatur- und Dehnungsmessung oder zwei Temperaturmessungen, nämlich an der Coriolis-Leitung und an der Einspannstelle.

Bei dem erfindungsgemäßen modellgestützten Verfahren kann die Korrektur der Dichtemessung auch über die gemessene Federkonstante $c_2$ des zweiten Modes erfolgen. Diese Federkonstante ändert sich sowohl mit der Temperatur als auch mit der axialen Spannung und kann zur Bestimmung einer der beiden Größen und damit zur Korrektur mindestens einer der beiden Einflußgrößen herangezogen werden. Sie wird wegen

$$G_2(j\omega_{01}) = \frac{j\omega_{01}}{c_a + c_b} = \frac{j\omega_{01}}{c_2}$$

über die Beziehung

$$c_2 = c_a + c_b = f(T, \sigma_c)$$

$$= \frac{j\omega_{01}}{G_2(j\omega_{01})}$$

während des laufenden Betriebs erfaßt.

**Patentansprüche**

1. Verfahren zur Bestimmung wenigstens-einer charakteristischer Größen eines Massendurchflußmeßgeräts, das nach dem Coriolis-Prinzip arbeitet und eine ein strömendes Medium führende Coriolis-Leitung (1) aufweist, wobei die Coriolis-Leitung (1) in einer ersten Eigenform definiert angeregt wird, **dadurch gekennzeichnet, daß** die Coriolis-Leitung ( 1 ) in einer von der ersten Eigenform verschiedenen zweiten Eigenform definiert angeregt wird, die definierte Anregung der Coriolis-Leitung (1) in der ersten Eigenform und in der zweiten Eigenform mittels zweier Schwingungserzeuger (2) erfolgt, daß die Geschwindigkeitsantworten der Eigenformen als Antwortverhalten der Coriolis-Leitung (1) auf die definierte Anregung in der ersten Eigenform und in der zweiten Eigenform mittels mindestens zwei Meßwertaufnehmern (3), die Corioliskräfte und/oder auf Coriolis-Kräften beruhende Coriolis-Schwingungen erfassen, erfaßt werden und daß als charakteristische Größen der Nullpunkt und die Empfindlichkeit des Massendurchflußmeßgeräts während des Betriebs des Massendurchflußmeßgeräts in Echtzeit bestimmt werden, indem die Geschwindigkeitsantworten der Eigenformen mit Hilfe eines mathematisch-physikalischen Modells für die schwingende, von dem Medium durchströmte Coriolis-Leitung (1) während des Betriebs des Massendurchflußmeßgeräts in Echtzeit ausgewertet werden.

2. Verfahren nach Anspruch 1, **dadurch gekennzeichnet, daß** die Coriolis-Leitung (1) in einer jeweils von der ersten Eigenform und von der zweiten Eigenform unabhängigen dritten Schwingungsform angeregt wird.

3. Verfahren nach Anspruch 2, **dadurch gekennzeichnet, daß** die Coriolis-Leitung (1) in einer jeweils von der ersten Eigenform, von der zweiten Eigenform und von der dritten Schwingungsform unabhängigen vierten Schwingungsform angeregt wird.

4. Verfahren nach Anspruch 2 oder 3, **dadurch gekennzeichnet, daß** die erste Eigenform und die dritte Schwingungsform von zueinander - vorzugsweise um 90° - phasenverschobenen Schwingungen im gleichen Mode der Coriolis-Leitung (1) gebildet werden.

5. Verfahren nach Anspruch 3 oder 4, **dadurch gekennzeichnet, daß** die zweite Eigenform und die vierte Schwingungsform von zueinander - vorzugsweise um 90° - phasenverschobenen Schwingungen im gleichen Mode der Coriolis-Leitung ( 1 ) gebildet werden.

6. Verfahren nach einem der Ansprüche 2 bis 5, **dadurch gekennzeichnet, daß** die erste Eigenform von einer Schwingung im Arbeits-Mode der Coriolis-Leitung (1) gebildet wird.

7. Verfahren nach einem der Ansprüche 2 bis 6, **dadurch gekennzeichnet, daß** die zweite Eigenform von einer Schwingung im Coriolis-Mode der Coriolis-Leitung (1) gebildet wird.

**Claims**

1. Method for the determination of characteristic values of a mass flow meter operating by the Coriolis principle and incorporating a fluid-conducting Coriolis conduit (1), wherein the Coriolis conduit (1) is excited in a defined first intrinsic pattern, **characterized in that** the Coriolis conduit (1) is excited in a defined second intrinsic pattern differing from the first intrinsic pattern, that the defined excitation of the Coriolis conduit (1) occurs by means of two oscillators (2) in the first intrinsic pattern and the second intrinsic pattern, that the speed response of the intrinsic pattern is registered as response behavior of the Coriolis conduit (1) to the defined excitation in the first intrinsic pattern and the second intrinsic pattern and that the zero-point determined by means of at least two detectors (3), which register the Coriolis forces and/or Coriolis oscillations based on Coriolis forces, and the sensibility of the mass flow meter are determined as characteristic values in real time during the operation of the mass flow meter, in which the speed response of the intrinsic patterns are interpreted in real time during operation of the mass flow meter with the aid of a physio-mathematical model for the oscillating Coriolis conduit (1) streamed with the medium.

2. Method according to claim 1, **characterized in that** the Coriolis conduit (1) is excited in a third oscillation pattern independent of both the first intrinsic pattern and the second intrinsic pattern.

3. Method according to claim 2, **characterized in that** the Coriolis conduit (1) is excited into a fourth oscillation pattern independent of each of the first intrinsic pattern, the second intrinsic pattern and the third oscillation pattern.

**4.** Method according to claim 2 or 3, **characterized in that** the first intrinsic pattern and the third oscillation pattern are generated in the same mode of the Coriolis conduit (1) by oscillations, which are mutually phase-shifted by preferably 90°.

**5.** Method according to claim 3 or 4, **characterized in that** the second intrinsic pattern and the fourth oscillation pattern are generated in the same mode of the Coriolis conduit (1) by oscillations, which are mutually phase-shifted by preferably 90°.

**6.** Method according to any one of claims 2 to 5, **characterized in that** the first intrinsic pattern is formed by an oscillation in the operating mode of the Coriolis conduit (1).

**7.** Method according to any one of claims 2 to 6, **characterized in that** the second intrinsic pattern is formed by an oscillation in the Coriolis mode of the Coriolis conduit (1).

**Revendications**

**1.** Procédé pour la détermination de grandeurs caractéristiques d'un débitmètre massique qui travaille conformément au principe de Coriolis et qui présente une conduite de Coriolis (1) guidant un milieu qui s'écoule, la conduite de Coriolis (1) étant excitée de manière définie dans un premier mode intrinsèque, **caractérisé en ce que** la conduite de Coriolis (1) est excitée de manière définie dans un deuxième mode intrinsèque différent du premier mode intrinsèque, l'excitation définie de la conduite de Coriolis (1) dans le premier mode intrinsèque et dans le deuxième mode intrinsèque a lieu à l'aide de deuxièmes générateurs d'oscillations (2), **en ce que** les réponses de vitesse des modes intrinsèques sont enregistrées à titre de comportement de réponse de la conduite de Coriolis (1) à l'excitation définie dans le premier mode intrinsèque et dans le deuxième mode intrinsèque à l'aide d'au moins deux capteurs de valeurs de mesure (3) qui enregistrent les forces de Coriolis et/ou des oscillations de Coriolis s'appuyant sur des forces de Coriolis, et **en ce que**, à titre de grandeurs caractéristiques, on détermine en temps réel le point neutre et la sensibilité du débitmètre massique en état de marche du débitmètre, en évaluant en temps réel les réponses de vitesse des modes intrinsèques à l'aide d'un modèle mathematico-physique pour la conduite de Coriolis oscillante (1) traversée par le milieu en état de marche du débitmètre.

**2.** Procédé selon la revendication 1, **caractérisé en ce que** la conduite de Coriolis (1) est excitée dans un troisième mode d'oscillation indépendante, respectivement du premier mode intrinsèque et du deuxième mode intrinsèque.

**3.** Procédé selon la revendication 2, **caractérisé en ce que** la conduite de Coriolis (1) est excitée dans un quatrième mode d'oscillation indépendante, respectivement du premier mode intrinsèque, du deuxième mode intrinsèque et du troisième mode d'oscillation.

**4.** Procédé selon la revendication 2 ou 3, **caractérisé en ce que** le premier mode intrinsèque et le troisième mode d'oscillation sont formés par des oscillations manifestant un décalage de phase réciproque - de préférence de 90 ° - dans le même mode de la conduite de Coriolis (1).

**5.** Procédé selon la revendication 3 ou 4, **caractérisé en ce que** le deuxième mode intrinsèque et le quatrième mode d'oscillation sont formés par des oscillations manifestant un décalage de phase réciproque - de préférence de 90 ° - dans le même mode de la conduite de Coriolis (1).

**6.** Procédé selon l'une quelconque des revendications 2 à 5, **caractérisé en ce que** le premier mode intrinsèque est formé par une oscillation dans le mode de travail de la conduite de Coriolis (1).

**7.** Procédé selon l'une quelconque des revendications 2 à 6, **caractérisé en ce que** le deuxième mode intrinsèque est formé par une oscillation dans le mode de travail de la conduite de Coriolis (1).

# Fig. 1

# Fig. 2

Fig. 3

EP 1 208 359 B1